# EUROPÄISCHE PATENTSCHRIFT

(11) **EP 4 194 896 B1**
(45) Veröffentlichungstag und Bekanntmachung des Hinweises auf die Patenterteilung: **19.11.2025**
(21) Anmeldenummer: 21212861.5
(22) Anmeldetag: 07.12.2021
(51) Int. Cl.: F21S 43/40, G01S 13/931, B60Q 1/00

(54) **RADARMODUL FÜR EINE KRAFTFAHRZEUGLEUCHTE**
RADAR MODULE FOR MOTOR VEHICLE LIGHTING
MODULE RADAR POUR UN PHARE DE VÉHICULE AUTOMOBILE

(43) Veröffentlichungstag der Anmeldung: 14.06.2023
(73) Patentinhaber: ZKW Group GmbH, 3250 Wieselburg (AT)
(72) Erfinder: Zeuner, Markus, 3240 Mank (AT); Wagner, Florian, 3300 Winklarn (AT); Salzer, Michael, 3261 Zarnsdorf (AT)
(74) Vertreter: Patentanwaltskanzlei Matschnig & Forsthuber OG

(56) Entgegenhaltungen:
- EP-A2- 1 167 870
- DE-A1- 102015 004 204

## Beschreibung

Die Erfindung betrifft eine Radarmodul für eine Kraftfahrzeugleuchte, welches Radarmodul Folgendes umfasst:
- eine Radarvorrichtung zur Abstrahlung von Radarstrahlung in Richtung einer Abstrahlrichtung,
- ein Gehäuse mit einer Abdeckscheibe, welche das Gehäuse in Hauptabstrahlrichtung abschließt, wobei die Radarvorrichtung innerhalb des Gehäuses angeordnet ist, wobei die Abdeckscheibe durch ein lichtdurchlässiges Lichtleitelement und einem das Lichtleitelement an einem Randbereich des Lichtleitelements begrenzenden opaken Abschnitt gebildet ist, wobei der opake Abschnitt unmittelbar an das Lichtleitelement anschließt,
   wobei das Lichtleitelement in Hauptabstrahlrichtung (X) der Radarvorrichtung nachgeschaltet ist, sodass Radarstrahlung der Radarvorrichtung durch das Lichtleitelement vor das Radarmodul abstrahlbar ist, wobei das Lichtleitelement eine erste Seite, welche der Radarvorrichtung zugewandt ist, und eine der ersten Seite gegenüberliegende zweite Seite aufweist,
- zumindest eine Lichtquelle zur Abstrahlung von sichtbarem Licht, wobei das Licht der zumindest einen Lichtquelle über das Lichtleitelement vor das Radarmodul projizierbar ist.

Die Erfindung betrifft weiters einen Kraftfahrzeugscheinwerfer mit zumindest einem erfindungsgemäßen Radarmodul.

Radarmodule aus dem Stand der Technik, beispielsweise Millimeter Wave Radar zur Objekterkennung, welche eine Beleuchtung von sichtbarem Licht vor dem Radarmodul ermöglichen, sind derart aufgebaut, dass hinter der Abdeckscheibe, also im Gehäuse ein Lichtleitelement angeordnet ist, welches eingerichtet ist, das Licht zumindest einer Lichtquelle vor das Radarmodul zu projizieren. Allerdings führt ein zwangsläufig vorhandener Luftspalt zwischen dem Lichtleitelement und der Abdeckscheibe, welcher die Radarstrahlung negativ beeinflusst.

Allerdings kann es auch bei einem formschlüssigen Stapel bzw. formschlüssigen Aneinanderreihen des Lichtleitelements und der Abdeckscheibe zur unerwünschten Brechung aufgrund von unterschiedlichen Brechungsindizes kommen.

Die DE 10 2015 004204 A1 zeigt ein Radarmodul für Kraftfahrzeugleuchten aus dem Stand der Technik. Eine Kraftfahrzeugsleuchte ist aus EP 1 167 870 A2 bekannt.

Es ist eine Aufgabe der Erfindung ein verbessertes Radarmodul bereitzustellen.

Diese Aufgabe wird dadurch gelöst, dass der Randbereich des Lichtleitelements abschnittsweise dem opaken Abschnitt entgegen der Hauptabstrahlrichtung vorsteht, sodass eine freie Fläche an dem Lichtleitelement ausgebildet ist,
wobei das Licht der zumindest einen Lichtquelle über die freie Fläche in das Lichtleitelement einkoppelbar ist,
und wobei die erste Seite des Lichtleitelements derart zur Hauptabstrahlrichtung geneigt ist, dass das Lichtleitelement ausgehend von der freien Fläche entlang des Lichtleitelements in Richtung eines der freien Fläche gegenüberliegenden Randbereiches eine Verjüngung in Richtung der Hauptabstrahlrichtung aufweist, wobei an der ersten Seite des Lichtleitelements Auskoppelelemente in Form von Mikrooptiken angeordnet sind, welche eingerichtet sind, Licht, welches über die freie Fläche in das Lichtleitelement eingekoppelt ist, auf die zweite Seite des Lichtleitelements zur Auskopplung des Lichts aus dem Lichtleitelement umzulenken, sodass Licht von der zumindest einen Lichtquelle über das Lichtleitelement vor das Radarmodul projiziert wird.

Es kann vorgesehen sein, dass die Mikrooptiken einen Durchmesser von kleiner 0,1 mm aufweisen, sodass von der Radarvorrichtung abgestrahlte Radarstrahlung durch die erste Seite des Lichtleitelements durchstrahlbar ist und Licht zur zweiten Seite des Lichtleitelements umgelenkt wird.

Es kann vorgesehen sein, dass der opake Abschnitt der Abdeckscheibe für sichtbares Licht lichtundurchlässig und für Radarstrahlung durchlässig ist.

Es kann vorgesehen sein, dass die Abdeckscheibe als einstückiges Bauteil hergestellt ist.

Es kann vorgesehen sein, dass die Abdeckscheibe mittels Spritzgussverfahren, beispielsweise Zwei-Komponenten-Spritzgießen, einstückig hergestellt ist.

Es kann vorgesehen sein, dass die freie Fläche des Lichtleitelements derart ausgerichtet ist, dass ein Flächenvektor der freien Fläche orthogonal zur Hauptabstrahlrichtung ist.

Es kann vorgesehen sein, dass die freie Fläche im Wesentlichen - gesehen in einem ordnungsgemäß eingebauten Zustand des Radarmoduls in einem Kraftfahrzeug - horizontal angeordnet ist,

Es kann vorgesehen sein, dass ausgehend von einem kartesischen Koordinatensystem, dessen x-Achse parallel zur Hauptabstrahlrichtung ist, das Lichtleitelement in einem Querschnitt, vorzugsweise in einem vertikalen Querschnitt, ausgehend von der freien Fläche eine Verjüngung in z-Richtung aufweist.

Es kann vorgesehen sein, dass das Radarmodul zumindest eine Vorsatzoptik aufweist, welche der zumindest einen Lichtquelle zugeordnet ist, wobei die Vorsatzoptik eingerichtet ist, das Licht der Lichtquelle zu parallelisieren.

Erfindungsgemäß ist vorgesehen, dass die Radarvorrichtung derart geneigt zum Lichtleitelement angeordnet ist, sodass die Abstrahlrichtung der Radarvorrichtung einen Winkel mit der Hauptabstrahlrichtung einschließt. Dadurch wird eine mögliche Radarwellenablenkung durch die prismatische Geometrie der Verjüngung durch diesen zur Hauptabstrahlrichtung verkippten Einbau der Radarvorrichtung gegenkorrigiert.

Die Verjüngung erzeugt einen homogenen Leuchteindruck über die gesamte zweite Seite des Lichtleitelements, weil unabhängig von der Distanz zur Lichteinkopplung eine konstante Leuchtdichte erzielt wird (eine Abweichung der Leuchtdichte ist vorzugsweise kleiner als 10%). Vorzugsweise weist die zumindest eine Lichtquelle eine Vorsatzoptik auf, sodass die zumindest eine Lichtquelle parallelisiertes Licht abstrahlt, wobei die parallelen Lichtstrahlen orthogonal zur Hauptabstrahlrichtung emittierbar sind, wobei die parallelisierten Lichtstrahlen den homogenen Leuchteindruck aufgrund der gleichmäßigen Beleuchtung der Auskoppelelemente auf der ersten Seite des Lichtleitelements verstärkt. Bevorzugt kann diese Vorsatzoptik als CPC-Optikkörper (Compound Parabolic Concentrator) ausgebildet sein. Die Vorsatzoptik kann in einer Ausführungsform mit der freien Fläche einstückig oder formschlüssig ausgeführt sein.

Die Aufgabe wird ebenso gelöst durch eine Kraftfahrzeugleuchte, insbesondere einen Kraftfahrzeugscheinwerfer, mit zumindest einem erfindungsgemäßen Radarmodul.

Nachfolgend wird die Erfindung anhand von beispielhaften Zeichnungen näher erläutert. Hierbei zeigt
Fig. 1 einen schematischen Querschnitt eines beispielhaften Radarmoduls, umfassend ein Gehäuse mit einer Abdeckscheibe, welche aus einem Lichtleitelement und einem opaken Abschnitt gebildet ist, wobei dem opaken Abschnitt ein Randbereich des Lichtleitelements vorsteht, sodass durch die so gebildete freie Fläche Licht einer Lichtquelle in das Lichtleitmodul einkoppelbar ist, welches Licht durch Auskoppelelemente aus dem Lichtleitelement vor das Radarmodul projizierbar ist, und
Fig. 2 einen schematischen Querschnitt eines Auskoppelelements mit einem Durchmesser.
Fig. 3 einen schematischen Querschnitt von Fig. 1, welche eine Detailansicht der Lichtquelle zeigt.

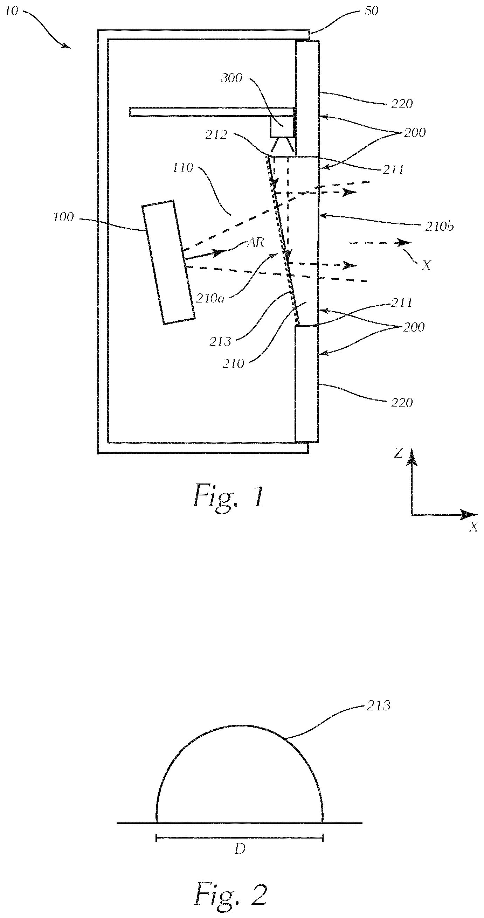

**Fig. 1** zeigt ein beispielhaftes Radarmodul **10** für einen Kraftfahrzeugscheinwerfer, welches Radarmodul **10** eine Radarvorrichtung **100** zur Abstrahlung von Radarstrahlung **110** in Richtung einer Abstrahlrichtung **AR** und ein Gehäuse **50** mit einer Abdeckscheibe **200,** welche das Gehäuse **50** in Hauptabstrahlrichtung **X** abschließt, aufweist.

Die Radarvorrichtung **100** ist dabei innerhalb des Gehäuses **50** angeordnet, wobei die Abdeckscheibe **200** durch ein lichtdurchlässiges Lichtleitelement 210 und einem das Lichtleitelement **210** an einem Randbereich **211** des Lichtleitelements **210** begrenzenden opaken Abschnitt **220** gebildet ist, wobei der opake Abschnitt **220** unmittelbar an das Lichtleitelement **210** anschließt. Die Abdeckscheibe **200** ist im gezeigten Beispiel einstückig mittels Spritzgießverfahren hergestellt.

Der opake Abschnitt **220** der Abdeckscheibe **200** ist dabei für sichtbares Licht lichtundurchlässig und für Radarstrahlung **110** durchlässig.

Weiter ist das Lichtleitelement 210 in Hauptabstrahlrichtung X der Radarvorrichtung 100 nachgeschaltet ist, sodass Radarstrahlung 110 der Radarvorrichtung 100 durch das Lichtleitelement 210 vor das Radarmodul 10 abstrahlbar ist, wobei das Lichtleitelement 210 eine erste Seite **210a,** welche der Radarvorrichtung 100 zugewandt ist, und eine der ersten Seite **210a** gegenüberliegende zweite Seite **210b** aufweist.

Das Radarmodul umfasst weiters zumindest eine Lichtquelle 300, beispielsweise eine LED, zur Abstrahlung von sichtbarem Licht, wobei das Licht der zumindest einen Lichtquelle 300 über das Lichtleitelement 210 vor das Radarmodul 10 projizierbar ist.

Der Randbereich 211 des Lichtleitelements 210 abschnittsweise dem opaken Abschnitt 220 entgegen der Hauptabstrahlrichtung X vorsteht, sodass eine freie Fläche 212 an dem Lichtleitelement **210** ausgebildet ist, wobei das Licht der zumindest einen Lichtquelle **300** über die freie Fläche **212** in das Lichtleitelement **210** einkoppelbar ist.

Die freie Fläche **212** des Lichtleitelements **210** ist im gezeigten Beispiel derart ausgerichtet, dass ein Flächenvektor der freien Fläche **212** orthogonal zur Hauptabstrahlrichtung **X** ist, wobei die freie Fläche **212** im gezeigten Beispiel im Wesentlichen - gesehen in einem ordnungsgemäß eingebauten Zustand des Radarmoduls **10** in einem Kraftfahrzeug - horizontal angeordnet ist.

Die erste Seite **210a** des Lichtleitelements **210** ist dabei derart zur Hauptabstrahlrichtung **X** geneigt, dass das Lichtleitelement **210** ausgehend von der freien Fläche **212** entlang des Lichtleitelements **210** in Richtung eines der freien Fläche **212** gegenüberliegenden Randbereiches **211** eine Verjüngung in Richtung der Hauptabstrahlrichtung **X** aufweist.

In anderen Worten, ausgehend von einem kartesischen Koordinatensystem, dessen x-Achse parallel zur Hauptabstrahlrichtung **X** ist, weist das Lichtleitelement **210** im gezeigten Beispiel in dem vertikalen Querschnitt ausgehend von der freien Fläche **212** eine Verjüngung in negativer z-Richtung auf.

An der ersten Seite **210a** des Lichtleitelements **210** sind Auskoppelelemente **213** in Form von Mikrooptiken angeordnet, welche eingerichtet sind, Licht, welches über die freie Fläche **212** in das Lichtleitelement **210** eingekoppelt ist, auf die zweite Seite **210b** des Lichtleitelements **210** zur Auskopplung des Lichts aus dem Lichtleitelement **210** umzulenken, sodass Licht von der zumindest einen Lichtquelle **300** über das Lichtleitelement **210** vor das Radarmodul **10** projiziert wird.

Die Mikrooptiken, wie in **Fig. 2** dargestellt, weisen jeweils einen Durchmesser **D** von kleiner 0,1 mm auf, sodass von der Radarvorrichtung **100** abgestrahlte Radarstrahlung **110** durch die erste Seite **210a** des Lichtleitelements **210** durchstrahlbar ist.

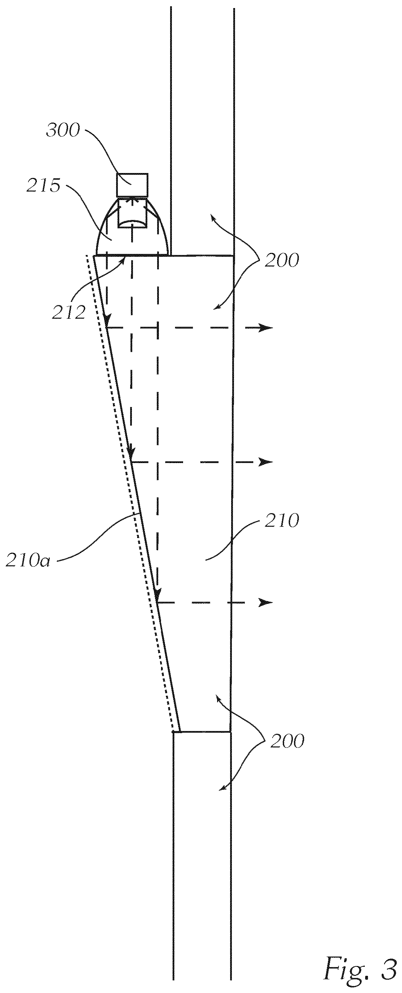

**Fig. 3** zeigt eine vorteilhafte Vorsatzoptik **215,** die das Licht der Lichtquelle **300** aufgrund ihrer Ausgestaltung als CPC-Optikkörper (Compound Parabolic Concentrator) parallelisiert, wobei das von der Lichtquelle gemeinsam mit der Vorsatzoptik **215** emittierbare Parallelstrahlbündel in das Lichtleitelement **210** über die freie Fläche **212** einkoppelt. Die erste Seite **210a** wird vorzugsweise über die gesamte Ausbreitung der Auskoppelelemente **213** besonders homogen ausgeleuchtet. Die Vorsatzoptik **215** kann in einer nicht gezeigten Ausführungsform mit der freien Fläche **212** einstückig oder formflüssig ausgeführt sein.

### LISTE DER BEZUGSZEICHEN

| | |
|---|---|
| Radarmodul | 10 |
| Gehäuse | 50 |
| Radarvorrichtung | 100 |
| Radarstrahlung | 110 |
| Abdeckscheibe | 200 |
| Lichtleitelement | 210 |
| Erste Seite | 210a |
| Zweite Seite | 210b |
| Randbereich | 211 |
| Freie Fläche | 212 |
| Auskoppelelemente | 213 |
| Vorsatzoptik | 215 |
| Opaker Abschnitt | 220 |
| Lichtquelle | 300 |
| Hauptabstrahlrichtung | X |
| Abstrahlrichtung | AR |
| Durchmesser | D |

## Patentansprüche

1. Radarmodul (10) für eine Kraftfahrzeugleuchte, welches Radarmodul (10) Folgendes umfasst:
- eine Radarvorrichtung (100) zur Abstrahlung von Radarstrahlung (110) in Richtung einer Abstrahlrichtung (AR),
- ein Gehäuse (50) mit einer Abdeckscheibe (200), welche das Gehäuse (50) in Hauptabstrahlrichtung (X) abschließt, wobei die Radarvorrichtung (100) innerhalb des Gehäuses (50) angeordnet ist, wobei die Abdeckscheibe (200) durch ein lichtdurchlässiges Lichtleitelement (210) und einem das Lichtleitelement (210) an einem Randbereich (211) des Lichtleitelements (210) begrenzenden opaken Abschnitt (220) gebildet ist, wobei der opake Abschnitt (220) unmittelbar an das Lichtleitelement (200) anschließt,
wobei das Lichtleitelement (210) in Hauptabstrahlrichtung (X) der Radarvorrichtung (100) nachgeschaltet ist, sodass Radarstrahlung (110) der Radarvorrichtung (100) durch das Lichtleitelement (210) vor das Radarmodul (10) abstrahlbar ist, wobei das Lichtleitelement (210) eine erste Seite (210a), welche der Radarvorrichtung (100) zugewandt ist, und eine der ersten Seite (210a) gegenüberliegende zweite Seite (210b) aufweist,
- zumindest eine Lichtquelle (300) zur Abstrahlung von sichtbarem Licht, wobei das Licht der zumindest einen Lichtquelle (300) über das Lichtleitelement (210) vor das Radarmodul (10) projizierbar ist,
**dadurch gekennzeichnet, dass**
der Randbereich (211) des Lichtleitelements (210) abschnittsweise dem opaken Abschnitt (220) entgegen der Hauptabstrahlrichtung (X) vorsteht, sodass eine freie Fläche (212) an dem Lichtleitelement (210) ausgebildet ist,
wobei das Licht der zumindest einen Lichtquelle (300) über die freie Fläche (212) in das Lichtleitelement (210) einkoppelbar ist,
wobei die erste Seite (210a) des Lichtleitelements (200) derart zur Hauptabstrahlrichtung (X) geneigt ist, dass das Lichtleitelement (210) ausgehend von der freien Fläche (212) entlang des Lichtleitelements (210) in Richtung eines der freien Fläche (212) gegenüberliegenden Randbereiches (211) eine Verjüngung in Richtung der Hauptabstrahlrichtung (X) aufweist, wobei an der ersten Seite (210a) des Lichtleitelements (210) Auskoppelelemente (213) in Form von Mikrooptiken angeordnet sind, welche eingerichtet sind, Licht, welches über die freie Fläche (212) in das Lichtleitelement (210) eingekoppelt ist, auf die zweite Seite (210b) des Lichtleitelements (210) zur Auskopplung des Lichts aus dem Lichtleitelement (210) umzulenken, sodass Licht von der zumindest einen Lichtquelle (300) über das Lichtleitelement (210) vor das Radarmodul (10) projiziert wird, und wobei die Radarvorrichtung (100) derart geneigt zum Lichtleitelement (210) angeordnet ist, sodass die Abstrahlrichtung (AR) der Radarvorrichtung (100) einen Winkel mit der Hauptabstrahlrichtung (X) einschließt.

2. Radarmodul nach Anspruch 1, **dadurch gekennzeichnet, dass** die Mikrooptiken (213) einen Durchmesser (D) von kleiner 0,1 mm aufweisen, sodass von der Radarvorrichtung (100) abgestrahlte Radarstrahlung (110) durch die erste Seite (210a) des Lichtleitelements (210) durchstrahlbar ist, und sodass Licht auf die zweite Seite (210b) des Lichtleitelements (210) zur Auskopplung des Lichtes umgelenkt wird.

3. Radarmodul nach Anspruch 1 oder 2, **dadurch gekennzeichnet, dass** der opake Abschnitt (220) der Abdeckscheibe (200) für sichtbares Licht lichtundurchlässig und für Radarstrahlung (110) durchlässig ist.

4. Radarmodul nach einem der Ansprüche 1 bis 3, **dadurch gekennzeichnet, dass** das Radarmodul (10) zumindest eine Vorsatzoptik (215) aufweist, welche der zumindest einen Lichtquelle (300) zugeordnet ist, wobei die Vorsatzoptik eingerichtet ist, das Licht der Lichtquelle (300) zu parallelisieren, wobei die Vorsatzoptik (215) vorzugsweise als CPC-Vorsatzoptik ausgebildet ist.

5. Radarmodul nach Anspruch 4, **dadurch gekennzeichnet, dass** die Vorsatzoptik (215) einstückig mit dem Lichtleitelement (210) hergestellt ist oder formschlüssig an der freien Fläche (212) des Lichtleitelements (210) angeordnet ist.

6. Radarmodul nach einem der Ansprüche 1 bis 5, **dadurch gekennzeichnet, dass** die Abdeckscheibe (200) als einstückiges Bauteil hergestellt ist.

7. Radarmodul nach einem der Ansprüche 1 bis 6, **dadurch gekennzeichnet, dass** die Abdeckscheibe (200) mittels Spritzgussverfahren einstückig hergestellt ist.

8. Radarmodul nach einem der Ansprüche 1 bis 7, **dadurch gekennzeichnet, dass** die freie Fläche (212) des Lichtleitelements (210) derart ausgerichtet ist, dass ein Flächenvektor der freien Fläche (212) orthogonal zur Hauptabstrahlrichtung (X) ist.

9. Radarmodul nach einem der Ansprüche 1 bis 8, **dadurch gekennzeichnet, dass** die freie Fläche (212) im Wesentlichen - gesehen in einem ordnungsgemäß eingebauten Zustand des Radarmoduls (10) in einem Kraftfahrzeug - horizontal angeordnet ist.

10. Radarmodul nach einem der Ansprüche 1 bis 9, **dadurch gekennzeichnet, dass** ausgehend von einem kartesischen Koordinatensystem, dessen x-Achse parallel zur Hauptabstrahlrichtung (X) ist, das Lichtleitelement (210) in einem vertikalen Querschnitt ausgehend von der freien Fläche (212) eine Verjüngung in negativer z-Richtung aufweist.

11. 4 Kraftfahrzeugleuchte, insbesondere ein Kraftfahrzeugscheinwerfer, mit zumindest einem Radarmodul nach einem der Ansprüche 1 bis 10.

## Claims

1. Radar module (10) for a motor vehicle light, which radar module (10) comprises the following:
- a radar device (100) for emitting radar radiation (110) in the direction of a radiation direction (AR),
- a housing (50) with a cover plate (200) which closes off the housing (50) in the main radiation direction (X), wherein the radar device (100) is arranged inside the housing (50), wherein the cover plate (200) is formed by a light-transmissive light guide element (210) and an opaque section (220) delimiting the light guide element (210) at an edge region (211) of the light guide element (210), wherein the opaque section (220) adjoins the light guide element (200),
wherein the light-guiding element (210) is connected downstream in the main radiation direction (X) of the radar device (100), so that radar radiation (110) from the radar device (100) can be emitted through the light-guiding element (210) can be emitted in front of the radar module (10), wherein the light-guiding element (210) has a first side (210a) facing the radar device (100) and a second side (210b) opposite the first side (210a),
- at least one light source (300) for emitting visible light, wherein the light from the at least one light source (300) can be projected in front of the radar module (10) via the light guide element (210),
**characterized in that**
the edge region (211) of the light guide element (210) protrudes in sections from the opaque section (220) in the opposite direction to the main radiation direction (X), so that a free surface (212) is formed on the light guide element (210),
wherein the light from the at least one light source (300) can be coupled into the light guide element (210) via the free surface (212),
wherein the first side (210a) of the light guide element (200) is inclined relative to the main radiation direction (X) in such a way that the light guide element (210) has a taper in the direction of the main radiation direction (X) starting from the free surface (212) along the light-guiding element (210) in the direction of an edge region (211) opposite the free surface (212), wherein decoupling elements (213) in the form of micro-optics are arranged on the first side (210a) of the light-guiding element (210) are arranged on the first side (210a) of the light-guiding element (210), which are designed to redirect light that is coupled into the light-guiding element (210) via the free surface (212) to the second side (210b) of the light-guiding element (210) for coupling the light out of the light-guiding element (210), so that light from the at least one light source (300) is projected via the light-guiding element (210) in front of the radar module (10), and wherein the radar device (100) is arranged at an angle to the light guide element (210) such that the radiation direction (AR) of the radar device (100) forms an angle with the main radiation direction (X).

2. Radar module according to claim 1, **characterized in that** the micro-optics (213) have a diameter (D) of less than 0.1 mm, so that radar radiation (110) emitted by the radar device (100) can pass through the first side (210a) of the light-guiding element (210) and so that light is deflected onto the second side (210b) of the light guide element (210) for coupling out the light.

3. Radar module according to claim 1 or 2, **characterized in that** the opaque section (220) of the cover plate (200) is opaque to visible light and transparent to radar radiation (110).

4. Radar module according to one of claims 1 to 3, **characterized in that** the radar module (10) has at least one attachment lens (215) which is assigned to the at least one light source (300), wherein the attachment lens is designed to parallelize the light from the light source (300), wherein the attachment lens (215) is preferably designed as a CPC attachment lens.

5. Radar module according to claim 4, **characterized in that** the attachment optics (215) are manufactured in one piece with the light guide element (210) or are arranged in a form-fitting manner on the free surface (212) of the light guide element (210).

6. Radar module according to one of claims 1 to 5, **characterized in that** the cover plate (200) is manufactured as a single-piece component.

7. Radar module according to one of claims 1 to 6, **characterized in that** the cover plate (200) is manufactured in one piece by means of an injection molding process.

8. Radar module according to one of claims 1 to 7, **characterized in that** the free surface (212) of the light guide element (210) is aligned such that a surface vector of the free surface (212) is orthogonal to the main radiation direction (X).

9. Radar module according to one of claims 1 to 8, **characterized in that** the free surface (212) is essentially arranged horizontally when viewed in a properly installed state of the radar module (10) in a motor vehicle.

10. Radar module according to one of claims 1 to 9, **characterized in that**, starting from a Cartesian coordinate system whose x-axis is parallel to the main radiation direction (X), the light guide element (210) has a taper in the negative z-direction in a vertical cross-section starting from the free surface (212).

11. Motor vehicle lamp, in particular a motor vehicle headlamp, with at least one radar module according to one of claims 1 to 10.

## Revendications

1. Module radar (10) pour un feu de véhicule automobile, lequel module radar (10) comprend :
- un dispositif radar (100) pour émettre un rayonnement radar (110) dans une direction d'émission (AR),
- un boîtier (50) avec une vitre de protection (200) qui ferme le boîtier (50) dans la direction d'émission principale (X), le dispositif radar (100) étant disposé à l'intérieur du boîtier (50), la vitre de protection (200) est formé par un élément conducteur de lumière (210) et une partie opaque (220) délimitant l'élément conducteur de lumière (210) au niveau d'une zone de bord (211) de l'élément conducteur de lumière (210), la partie opaque (220) étant directement raccordée à l'élément conducteur de lumière (200),
l'élément de guidage de lumière (210) étant monté en aval dans la direction d'émission principale (X) du dispositif radar (100), de sorte que le rayonnement radar (110) du dispositif radar (100) peut être émis à travers l'élément de guidage de lumière (210) devant le module radar (10), l'élément de guidage de lumière (210) présentant un premier côté (210a) qui est tourné vers le dispositif radar (100) et un deuxième côté (210b) opposé au premier côté (210a),
- au moins une source lumineuse (300) pour émettre de la lumière visible, la lumière de la au moins une source lumineuse (300) pouvant être projetée devant le module radar (10) via l'élément de guidage de lumière (210),
**caractérisé en ce que**
la zone périphérique (211) de l'élément de guidage de lumière (210) dépasse par sections de la section opaque (220) dans le sens opposé à la direction d'émission principale (X), de sorte qu'une surface libre (212) est formée sur l'élément de guidage de lumière (210),
dans lequel la lumière provenant d'au moins une source lumineuse (300) peut être couplée dans l'élément de guidage de lumière (210) via la surface libre (212),
dans lequel le premier côté (210a) de l'élément de guidage de lumière (200) est incliné par rapport à la direction d'émission principale (X) de telle sorte que l'élément de guidage de lumière (210) présente, à partir de la surface libre (212) le long de l'élément de guidage de lumière (210) en direction d'une zone de bordure (211) opposée à la surface libre (212), un rétrécissement en direction de la direction d'émission principale (X), des éléments de découplage (213) sous forme de micro-optiques étant disposés sur le premier côté (210a) de l'élément de guidage de lumière (210) sont disposés des éléments de découplage (213) sous forme de micro-optiques, qui sont conçus pour dévier la lumière, qui est couplée dans l'élément de guidage de lumière (210) via la surface libre (212), vers le deuxième côté (210b) de l'élément de guidage de lumière (210) afin de découpler la lumière de l'élément de guidage de lumière (210), de sorte que la lumière provenant de la au moins une source de lumière (300) est projetée via l'élément de guidage de lumière (210) devant le module radar (10), et dans lequel le dispositif radar (100) est disposé de manière inclinée par rapport à l'élément de guidage de lumière (210) de telle sorte que la direction d'émission (AR) du dispositif radar (100) forme un angle avec la direction d'émission principale (X).

2. Module radar selon la revendication 1, **caractérisé en ce que** les micro-optiques (213) ont un diamètre (D) inférieur à 0,1 mm, de sorte que le rayonnement radar (110) émis par le dispositif radar (100) peut traverser le premier côté (210a) de l'élément de guidage de lumière (210) et de sorte que la lumière soit déviée vers le deuxième côté (210b) de l'élément de guidage de lumière (210) pour le découplage de la lumière.

3. Module radar selon la revendication 1 ou 2, **caractérisé en ce que** la partie opaque (220) de la vitre de protection (200) est opaque à la lumière visible et transparente au rayonnement radar (110).

4. Module radar selon l'une des revendications 1 à 3, **caractérisé en ce que** le module radar (10) comporte au moins une optique additionnelle (215) qui est associée à la au moins une source lumineuse (300), l'optique additionnelle étant agencée pour rendre parallèle la lumière de la source lumineuse (300), l'optique additionnelle (215) étant de préférence réalisée sous la forme d'une optique additionnelle CPC.

5. Module radar selon la revendication 4, **caractérisé en ce que** l'optique additionnelle (215) est fabriquée d'un seul tenant avec l'élément de guidage de lumière (210) ou est disposée par complémentarité de forme sur la surface libre (212) de l'élément de guidage de lumière (210).

6. Module radar selon l'une des revendications 1 à 5, **caractérisé en ce que** la vitre de protection (200) est fabriquée en une seule pièce.

7. Module radar selon l'une des revendications 1 à 6, **caractérisé en ce que** la vitre de protection (200) est fabriquée d'un seul tenant par moulage par injection.

8. Module radar selon l'une des revendications 1 à 7, **caractérisé en ce que** la surface libre (212) de l'élément de guidage de lumière (210) est orientée de telle sorte qu'un vecteur de surface de la surface libre (212) soit orthogonal à la direction d'émission principale (X).

9. Module radar selon l'une des revendications 1 à 8, **caractérisé en ce que** la surface libre (212) est disposée essentiellement à l'horizontale, vue dans un état correctement monté du module radar (10) dans un véhicule automobile.

10. Module radar selon l'une des revendications 1 à 9, **caractérisé en ce que**, à partir d'un système de coordonnées cartésiennes dont l'axe x est parallèle à la direction d'émission principale (X), l'élément de guidage de lumière (210) présente, dans une section transversale verticale à partir de la surface libre (212), un rétrécissement dans la direction z négative.

11. Projecteur de véhicule automobile, en particulier un phare de véhicule automobile, comprenant au moins un module radar selon l'une des revendications 1 à 10.
